# EUROPEAN PATENT APPLICATION

(11) **EP 2 133 698 A1**
(43) Date of publication of application: **16.12.2009**
(21) Application number: 08739085.2
(22) Date of filing: 27.03.2008
(51) Int. Cl.: G01P 3/487, F16C 33/78, F16C 41/00

(54) **ROTATION SPEED DETECTION DEVICE AND ROLLING BEARING DEVICE USING THE SAME**

(30) Priority: 29.03.2007 JP 2007088221; 30.03.2007 JP 2007094089
(71) Applicant: JTEKT Corporation, Osaka-shi Osaka 542-8502 (JP)
(72) Inventor: ISHII, Yasuhiko, Osaka-shi Osaka 542-8502 (JP); MOTOHASHI, Nobutsuna, Osaka-shi Osaka 542-8502 (JP)
(74) Representative: Weber, Joachim
(86) International application number: PCT/JP2008/055956
(87) International publication number: WO 2008/120694

(57) **Abstract**

A protruding portion of a rotational speed detecting unit which is attached to a stationary side seal unit which is fixed to a stationary member which protruding portion protrudes axially and outer circumferentially of the stationary member is formed into a shape which has projecting portions in an axial direction, whereby the protrusion to the axial direction is reduced without reducing a bending strength in the axial direction, as a result of which the rotational speed detecting unit is miniaturized in the axial direction. Further, reinforcement members are embedded in an interior of the protruding portion, whereby the rotational speed detecting unit is miniaturized further in the axial direction.

## Description

### TECHNICAL FIELD

The present invention relates to a rotational speed detecting unit and more particularly to a rotational speed detecting unit for detecting a rotational speed of a wheel of a motor vehicle. In addition, the invention relates-to a bearing unit which employs the same rotational speed detecting unit.

### BACKGROUND ART

As antilock brake systems propagate, rotational speed detecting units for detecting a rotational speed of a wheel are required to be equipped on wheels, and it becomes practice to equip the same unit on a rolling bearing unit. Because of this, miniaturization of such rotational speed detecting units has been in demand.

For example, in a technique disclosed in JP-A-2000-346858, by integrating a sealing unit for sealing a clearance between an inner ring which constitutes a movable ring and an outer ring which constitutes a stationary ring of an axle with a rotational speed detecting unit, miniaturization of the periphery of a wheel is accomplished as a whole, and intrusion of water into the rotational speed detecting unit area is prevented.

In the technique in JP-A-2000-346858, the wheel speed detecting unit is provided on a vehicle body side of the wheel. However, a knuckle which connects a rolling bearing unit with a main part of a vehicle body and a CVJ (Constant Velocity Joint) are disposed on the vehicle body side of the wheel, and in order to prevent the interference of the wheel speed detecting unit with those parts, the wheel speed detecting unit needs to be miniaturized further. In addition, although the technique according to JP-A-2000-346858 is used, in order to avoid the interference between the wheel speed detecting unit and the knuckle, such a measure becomes necessary that a cutout is provided which is oriented toward the vehicle body in an axial direction of the wheel (hereinafter, referred to as an axial direction). Because of this, it is desired to miniaturize the wheel speed detecting unit, that is, the rotational speed detecting unit particularly in the axial direction.

In addition, in the technique disclosed in JP-A-2000-346858, for example, when the rotational speed detecting unit is used in an environment where an unforeseeable drastic temperature change occurs, due to shrinkage in the resin material or difference in expansion coefficient between the resin material and the metallic material, a clearance tends to be easily generated between a metal core and the resin member, leading to a fear that water or the like intrudes into the clearance so generated. Since the intrusion of water to the bearing side is prevented by the metal core, although there is no such situation that water or the like intrudes directly into the bearing portion, water or the like stays between the metal core and the resin material. As this occurs, in the event that an aqueous solution in which calcium chloride or road salt which is used as a snow melting agent in the winter season is dissolved inters into the clearance between the metal core and the resin member to stay in the clearance produced between the metal core and the resin material, the aqueous solution corrodes the resin member to thereby cause the sensor embedded in the resin material to be exposed. There is also a fear that water or the like comes into direct contact with the sensor so exposed.

### DISCLOSURE OF THE INVENTION

### PROBLEM THAT THE INVENTION IS TO SOLVE

The invention has been made in view of the situations, and an object thereof is to provide a rotational speed detecting unit which is miniaturized in the axial direction and a rolling bearing unit which employs the same rotational speed detecting unit.

In addition, a further object of the invention is to provide a rotational speed detecting unit which is improved so as to suppress the corrosion of a resin by intrusion of an aqueous calcium chloride.

### MEANS FOR SOLVING THE PROBLEM

According to the invention, there is provided a rotational speed detecting unit comprising a metal core comprising a cylindrical portion which is fitted and fixed to a stationary member, and a resin member in which a sensor for detecting a rotational speed of a rotary member and lead wires connected to the sensor are embedded, wherein a sensor side end portion of the resin member is fixed to the metal core and a portion of the resin member where the lead wires are embedded extends in a radial direction of the cylindrical portion. In addition, the portion of the resin member where the lead wires are embedded has a shape in which at least one or more projecting portions are provided in an axial direction of the cylindrical portion in a section taken along a plane which is substantially parallel to an outer circumferential surface of the cylindrical portion.

Since the portion of the resin member where the lead wires are embedded has the shape in which at least one or more projecting portions are provided in the axial direction of the cylindrical portion in the section taken along the plane which is substantially parallel to the outer circumferential surface of the cylindrical portion, the bending strength of the portion of the resin member where the lead wires are embedded toward the axial direction of the cylindrical portion (hereinafter, referred to as an axial direction) becomes larger than that of the same portion when the portion is formed into a different shape with the same sectional area such as a rectangular shape or an oval shape. Consequently, a sectional area required to ensure the same bending strength as that of the conventional rotational speed detecting unit becomes smaller. By reducing the axial length of the portion of the resin member where the lead wires are embedded so as to reduce the sectional area thereof, the rotational speed detecting unit can be miniaturized in the axial direction.

In addition, the sectional shape preferably has a shape which is made up of at least one shape selected from a group of shapes including a substantially convex shape, a substantially U-like shape, and a substantially W-like shape.

With any of those shapes, the axial bending strength is increased compared with a simple rectangular cross-sectional shape.

In addition, it is preferable that a reinforcement member is embedded in the periphery of the portion of the resin member
where the lead wires are embedded.

The strength of the periphery of the portion of the resin member where the lead wires are embedded is increased by embedding the reinforcement member, and the sectional area necessary to obtain the required bending strength can be reduced.

In addition, the rotational speed detecting unit according to the invention is preferably used in a rolling bearing unit.

According to the invention, by reducing the sectional area of the portion of the resin member where the lead wires are embedded, the rotational speed detecting unit can be provided which is miniaturized in the axial direction.

In addition, according to the invention, there is provided a rotational speed detecting unit comprising a stationary side metal core which is fixed to a stationary member and which has a recessed portion, a rotatable side metal core which is fixed to a rotary member, a first seal member which is fixed to either of the stationary side metal core and the rotatable side metal core and is brought into sliding contact with the other, a resin member in which a sensor for detecting a rotational speed of the rotary member is embedded and of which a portion where the sensor is embedded is inserted to be fixed in the recessed portion of the stationary side metal core, and a second seal member for filling a clearance that is produced between the stationary side metal core and the resin member.

According to the invention, since the second seal member for filling the clearance produced between the stationary side metal core and the resin member is provided, the intrusion of water such as an aqueous calcium chloride between the metal core and the resin member can be prevented, whereby the corrosion of the resin member is suppressed. As a result, the detection of speed by the sensor can be ensured.

The second seal member is preferably made of a material having resistance characteristics against calcium chloride as a main component.

Since the second seal member is made of the material having resistance characteristics against calcium chloride as the main component, there occurs no such situation that the second seal member itself is corroded by calcium chloride, whereby the second seal member can continue to fill the clearance produced between the metal core and the resin member over a long period of time. Consequently, the intrusion of aqueous calcium chloride between the metal core and the resin member can be prevented over the long period of time, and the corrosion of the resin member is suppressed further. As a result, the speed detection by the sensor can be ensured.

The rotational speed detecting unit according to the invention is preferably such that the main component of the second seal member is a nitrile rubber (NBR) or hydrogenated nitrile' rubber (HNBR).

Since the main component of the second seal member is the nitrile rubber (NBR) or hydrogenated nitrile rubber (HNBR), the intrusion of aqueous calcium chloride between the metal core and the resin member can be prevented by the member which is inexpensive and which has general-purpose properties.

The rotational speed detecting unit according to the invention is preferably such that the second seal member is molded integrally with the first seal member.

Since the second seal member is molded integrally with the first seal member, the intrusion of aqueous calcium chloride between the metal core and the resin member can be prevented by the configuration which is inexpensive and simple.

In addition, the rotational speed detecting unit according to the invention can preferably be applied to a rolling bearing unit.

According to the invention, the rotational speed detecting unit can be provided which is improved so as to prevent the damage to the resin by the intrusion of aqueous calcium chloride to thereby protect the sensor.

### BRIEF DESCRIPTION OF THE DRAWINGS

Fig. 1 is a sectional view of a rolling bearing unit according to a first embodiment which is taken along a plane including an axis of a wheel.
Fig. 2 is a partially enlarged sectional view of the periphery of a sensor shown in Fig. 1.
Fig. 3 is a view of the rolling bearing unit according to the first embodiment as seen from a vehicle body side thereof.
Fig. 4 is a partial cross-sectional view of the rolling bearing unit according to the first embodiment.
Fig. 5 is a partial cross-sectional view of a rolling bearing unit according to a second embodiment.
Fig. 6 is a partially enlarged view of a rolling bearing unit according to a third embodiment.

### BEST MODE FOR CARRYING OUT THE INVENTION

### (First Embodiment)

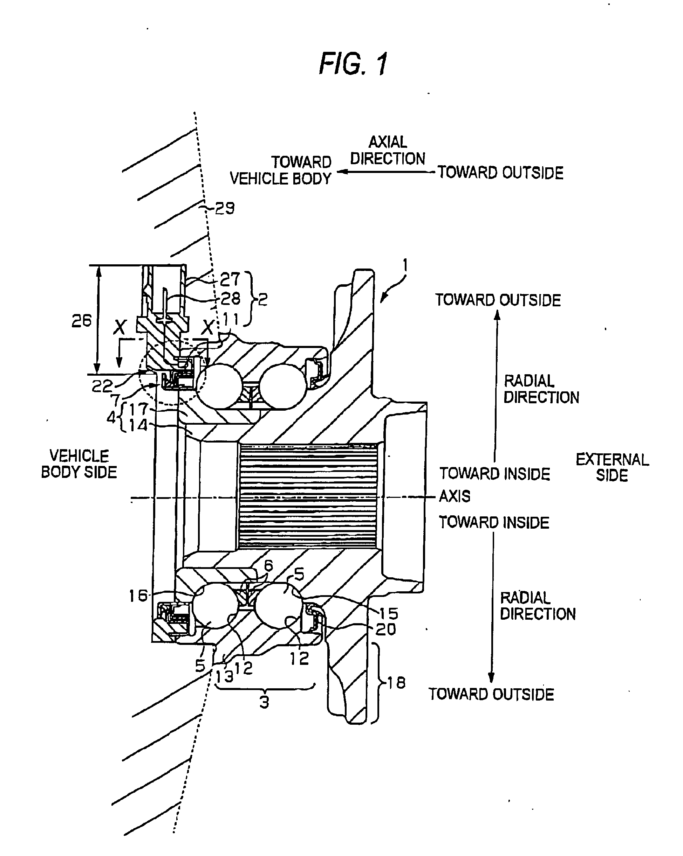

A first embodiment is an embodiment in which a rotational speed detecting unit according to the invention is integrated with a seal unit for application to a rolling bearing unit. Hereinafter, the first embodiment will be described by the use of Figs. 1 to 3. Fig. 1 is a sectional view of a rolling bearing unit according to the first embodiment which is taken along a plane which includes an axis thereof. In the figure, a left-hand side denotes an inside of a vehicle, and a right-hand side denotes an outside of the vehicle.

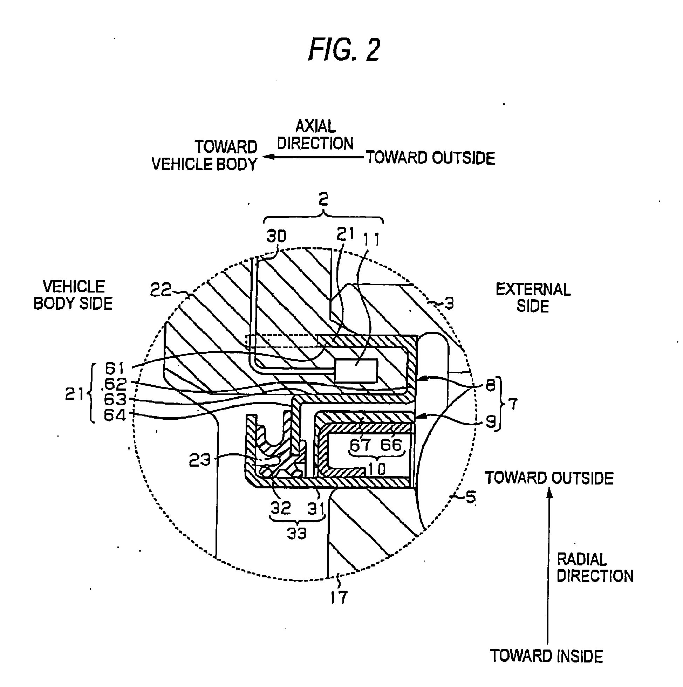

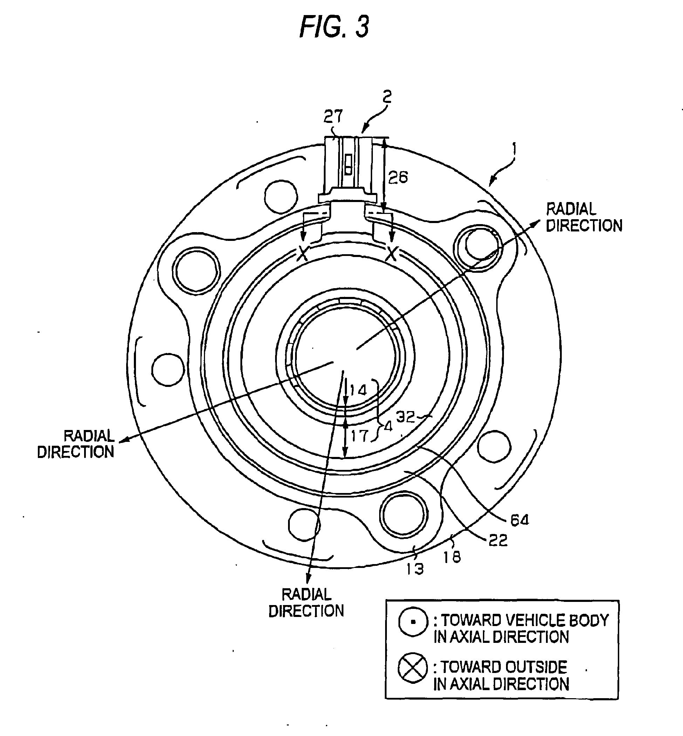

Fig. 2 is an enlarged view of a main part of Fig. 1. Fig. 3 is a view of the rolling bearing unit according to the first embodiment as seen from a vehicle body side thereof. In addition, in Figs. 1 to 3, like reference numerals will be given to like portions, and in the following description, Figs. 1 to 3 will be referred to, as well.

Firstly, the configuration of a rolling bearing unit will be described sequentially.
A hub unit 1 includes a vehicle body side raceway member 3 which is fixed to a vehicle body side, a wheel side raceway member 4 to which a wheel is attached, balls 5 which are a plurality of rolling elements disposed in two rows between the vehicle body side raceway member 3 and the wheel side raceway member, and cages 6 for retaining individually the balls 5 in the respective rows.

The vehicle body side raceway member 3 is a substantially cylindrical stationary member and has at an outer circumferential portion a flange 13 with which the vehicle body side raceway member 3 is attached to a knuckle 29 which is a suspension device to the vehicle body with bolts. Two outer ring raceways 12 which are brought into sliding contact with the balls 5 are formed on an inner circumferential surface of the vehicle body side raceway member 3.

The wheel side raceway member 4 comprises a hollow shaft 14 and an inner ring 17. The hollow shaft 14 is a substantially cylindrical rotary member, and a flange portion 18 to which a plurality of bolts for attaching a wheel are fixed and a raceway groove 15 which is brought into sliding contact with the balls 5 are provided on an outer circumferential portion of the hollow shaft 14, the inner ring 17 being fitted on and fixed to the hollow shaft 14 in the vicinity of a vehicle body side end portion thereof. A raceway groove 16 which is brought into sliding contact with the balls 5 is formed on the inner ring 17 in such a manner as to be disposed to one side of the raceway groove 15 on the hollow shaft 14. A seal member 20 comprising an elastic seal and a metal core is provided between an outer end portion of the vehicle body side raceway member 3 and the hollow shaft 14.

A seal unit 7 including a rotational speed detecting unit 2 is provided between the vehicle body side end portion of the inner ring 17 and a vehicle body side end portion of the vehicle body side raceway member 3. Referring mainly to Fig. 2, the same seal unit 7 comprises a stationary side seal member 8 which is fixed to the vehicle body side raceway member 3 and a rotational side seal member 9 is fixed to the wheel side raceway member 4 or more specifically to the inner ring 17.

The stationary side seal member 8 includes a metal core 21, a resin member 22 which is made integral with the metal core 21 through insert molding, a sensor 11 which is resin molded to the metal core 21, and an elastic seal member 23.

As is clearly shown in Fig. 2 which is a partially enlarged view of a peripheral portion of the sensor, the metal core 21 of the stationary side seal member 8 is formed into an annular shape by pressing a metal sheet. Namely, the metal core 21 has a fitting cylindrical portion 61 which is fitted to be fixed to the vehicle body side end portion of the vehicle body side raceway member 3, a connecting portion 62 which is consecutive to an axially outward end portion of the fitting cylindrical portion 61 so as to extend radially toward an axis of the bearing unit, a water intrusion preventing cylindrical portion 63 which is consecutive to the connecting portion 62 so as to extend axially toward the vehicle body, and a flange portion 64 which is consecutive to the water intrusion preventing cylindrical portion 63 so as to extend radially toward the axis. The elastic seal member 23 is bonded to an end portion of the flange portion 64. In addition, the resin member 22 is filled in an axially outward recess which is defined by the fitting cylindrical portion 61, the connecting portion 62 and the water intrusion preventing cylindrical portion 63 through molding. In addition, the metal core 21 is made of a nonmagnetic metal such as SUS304 so as to facilitate the entrance of magnetic line of force to a detecting surface of the sensor 11.

The resin member 22 has an annular shape, and an external shape of an annular portion thereof is almost equal to an external shape of the vehicle body side end portion of the vehicle body side raceway member 3. In addition, a protruding portion 26 is provided which protrudes axially toward the vehicle body side and radially from a portion of the annular portion where the sensor 11 is embedded. A connector portion 27 to which a wiring harness for connecting a processing device provided on the vehicle body side with the sensor 11 is attached is integrally molded to an upper end portion of the protruding portion 26. A signal connector pin 28 is provided in the connector portion 27, and the sensor 11 and the connector pin 28 are connected to each other via lead wires 30.

In addition, the rotational speed detecting unit 2 comprises the sensor 11, the connector portion 27 through which an output of the sensor 11 is taken out to an external portion, a wiring device such as the connector pin 28 and the lead wires 30 and the signal processing device (not shown). The sensor 11 is a magnetic sensor and orients its detecting surface radially toward the axis.

The rotatable side seal member 9 includes a slinger 33 which is formed into an L-shape in section by pressing a metal sheet and a pulser 10 which is fixed to a cylindrical portion 31. The slinger 33 has the cylindrical portion 31 which is fitted on and fixed to the vehicle body side end portion of the inner ring 17 and an outer circumferentially oriented flange portion 32 which is consecutive to an axial vehicle body side end portion (a left end portion) of the cylindrical portion 31 and which extends radially toward the vehicle body side raceway member 3. The elastic seal member 23 which is fixed to the axis oriented flange portion 64 is brought into sliding contact with the outer circumferentially oriented flange portion 32 and the cylindrical portion 31.

The pulser 10 is such as to generate a magnetic force by disposing alternately N poles and S poles for the sensor 11 which is combined therewith to output rotational signals and comprises an annular support member 66 and a magnetized element 67 which is bonded to the annular support member 66. The magnetized element 67 is formed by a magnetic powder employing a rubber as a binder being magnetized. In the magnetized element 67, a magnetic force generating surface is oriented radially outwards and is disposed so as to confront the detecting surface of the sensor 11. Consequently, the sensor 11 can detect a magnetic force generated by the pulser 10, whereby rotation of the wheel side raceway member 4 is detected.

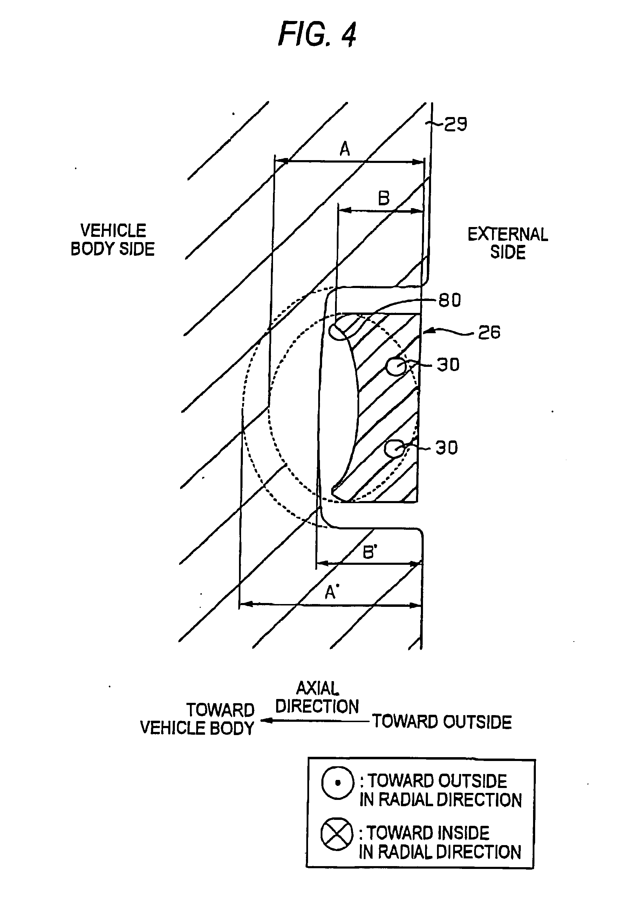

Next, the construction of the protruding portion 26 will be described by the use of Fig. 4. Fig. 4 is a sectional view taken along an X-X plane shown in Figs. 1 and 3, that is, a plane which is substantially parallel to an outer circumferential surface of the fitting cylindrical portion 61 of the metal core 21. As is shown in Fig. 4, the protruding portion 26 exhibits a substantially U-shaped sectional shape which is configured by a curve. Namely, the protruding portion 26 or the portion of the resin member where the lead wires are embedded has a shape which includes two projecting portions 80 in the axial direction in its sectional shape taken along the plane which is substantially parallel to the outer circumferential surface of the fitting cylindrical portion 61.

According to the rolling bearing unit which employs the rotational speed detecting unit of the embodiment described heretofore, the following advantages can be obtained.

(1) In the embodiment, the protruding portion 26 or the portion of the resin member where the lead wires are embedded has the substantially U-like shape which has the two projecting portions 80 in the axial direction in its sectional shape taken along the plane which substantially parallel to the outer circumferential surface of the fitting cylindrical portion 61 (hereinafter, when section, sectional area, sectional shape are referred to, they are understood to be based on the section taken along in the way described above). Because of this, a bending strength of the protruding portion 26 toward the axial direction becomes larger than that of the same portion when the portion is formed into a different shape with the same sectional area such as an oval shape which is normally used. Consequently, the sectional area can be reduced when attempting to ensure the same bending strength as that of the conventional rotational speed detecting unit. By reducing the sectional area by reducing the axial length of the protruding portion 26, the rotational speed detecting unit, that is, the rotational speed detecting unit 2 can be miniaturized in the axial direction. Namely, as is shown in Fig. 4, the protruding portion 26 can be configured with a smaller protruding width B, compared with an axially protruding width A of the conventional rotational speed detecting unit. In this way, the protruding portion 26 can be miniaturized in the axial direction, that is, the rotational speed detecting unit 2 can be miniaturized in the axial direction.

(2) By miniaturizing the rotational speed detecting unit 2 in the axial direction, the degree of freedom with respect to design of the periphery of the wheel is increased. In particular, a cutoff provided in the knuckle 29 to avoid the interference with the protruding portion 26 can be reduced to a cutout amount B' which is smaller than a conventional cutout amount A', thereby making it possible to suppress the reduction in strength of the knuckle 29.

In addition, the embodiment that has been described heretofore may be modified in a way that will be described below.

- In the first embodiment, while the two projecting portions 80 are provided so that the sectional shape of the protruding portion 26 taken along the plane which is substantially parallel to the outer circumferential surface of the fitting cylindrical portion 61 becomes the substantially U-shape, a configuration can be adopted in which one projecting portion 80 is provided or a configuration can be adopted in which three or more projecting portions 80 are provided. In addition, with respect to the position of the projecting portion 80, a configuration may be adopted in which the projecting portion/s 80 is/are positioned so that the sectional shape becomes a convex shape, or the projecting portion/s 80 may be oriented axially outwards. In addition, a configuration may be adopted in which by providing one of the projecting portions 80 in such a manner as to be oriented axially toward the vehicle body and providing the other in such a manner as to be oriented axially outwards, the protruding portion 26 is made to have, for example, a substantially cross-like sectional shape or a substantially T-shaped sectional shape. Further, with respect to the sectional shape of the projecting portion 80, the projecting portion 80 may be formed into a square shape, a triangular shape or the like. Namely, the bending strength per the same sectional area may be able to be increased by configuring the protruding portion 26 into any shape including the projecting portion/s 80, compared with the case where the protruding portion 26 is formed into a circular shape, an oval shape, a square shape or the like in section.

- In the first embodiment, while the rotational speed detecting unit is integrated with the seal unit so as to make up the seal unit having the rotational speed detecting unit, the seal unit and the rotational speed detecting unit may be provided separately. Namely, with a rotational speed detecting unit having a protruding portion protruding axially towards a vehicle body side in its axial direction, by adopting the same sectional shape as that of the embodiment for the sectional shape of the protruding portion, the axial width of the rotational speed detecting unit can be reduced.

- In addition, in the first embodiment, while the rotational speed detecting unit 2 is installed at the upper end portion of the vehicle body side raceway member 3, the invention is not limited thereto, and hence, the rotational speed detecting unit 2 can be disposed at a lower end portion of the vehicle body side raceway member 3 or in other arbitrary positions.

- In the first embodiment, while the configuration is adopted
in which the projecting portions 80 are provided on the protruding portion 26, the protruding portion 26 does not necessarily have to take the shape including the projecting portions 80 but can take any shape, provided that the shape can provide a larger bending strength than the bending strength provided when the protruding portion is formed into the rectangular shape or oval shape in section. For example, in the event that the bending strength of the protruding portion becomes larger than the bending strength provided when the protruding portion is formed into the rectangular shape or oval shape in section by forming the protruding portion so that its overall sectional shape becomes a triangular shape, the protruding portion may be so constructed. Namely, the protruding portion may take any sectional shape, provided that the bending strength can be increased by the sectional shape taken, and as a result, the sectional area can be reduced with the same bending strength maintained and more particularly the protruding width in the axial direction can be reduced.

### (Second Embodiment)

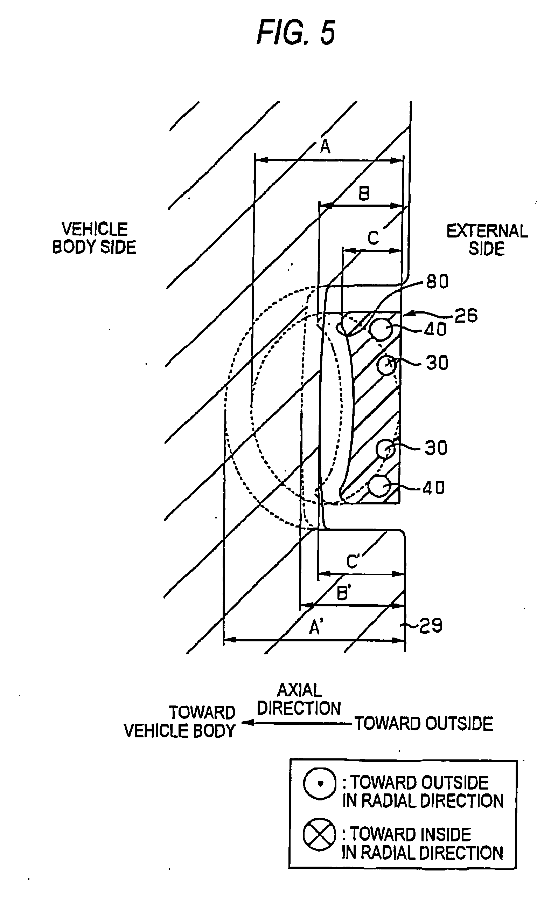

Hereinafter, another embodiment of a rotational speed detecting unit which embodies the invention will be described by the use of Fig. 5. Note that since the second embodiment adopts a configuration which is modified from that of the first embodiment only in that reinforcement members are inserted in the interior of the protruding portion 26 of the first embodiment, the detailed description of like portions will be omitted.

Fig. 5 is a sectional view taken along the X-X plane shown in Figs. 1 and 3, that is, the plane which is substantially parallel to the outer circumferential surface of the fitting cylindrical portion 61 of the metal core 21. As is shown in Fig. 5, in this embodiment, too, a sectional shape of a protruding portion 26 exhibits a substantially U-like shape which is made up of a curve. Namely, the protruding portion 26 or a portion of a resin member where lead wires are embedded has a shape which includes two projecting portions in an axial direction in a sectional shape taken along a plane which is substantially parallel to an outer circumferential surface of a fitting cylindrical portion 61.

Further, in this embodiment, reinforcement members 40 are embedded on the periphery of the portion of the resin member
where the lead wires 30 are embedded. As the reinforcement members 40, in addition to metals such as stainless steels and steel materials, fibers such as carbon fibers, glass fibers and the like and various types of resins can be used.

According to a rolling bearing unit which employs the rotational speed detecting unit of the second embodiment, the following advantages can be obtained.

(3) In the embodiment, the protruding portion 26, that is, the portion of the resin member where the lead wires are embedded has the substantially U-like shape which includes the two projecting portions 80 in the axial direction in the sectional shape taken along the plane which is substantially parallel to the outer circumferential surface of the fitting cylindrical portion 61, and, in addition to this, has the reinforcement members 40 embedded therein. Because of this, the bending strength of the protruding portion 26 in the axial direction becomes larger than that resulting when the protruding portion 26 includes only the projecting portions 80 with the same sectional area. Consequently, in order to ensure the same bending strength as the conventional one, the sectional area can be reduced further. Namely, the rotational speed detecting unit, that is, the rotational speed detecting unit 2 can be miniaturized further in the axial direction by reducing the sectional area by reducing the length in the axial direction. Namely, as is shown in Fig. 5, the protruding portion 26 can be configured with a much smaller projecting width C, compared with the conventional axial projecting width A and, further, the projecting width B of the first embodiment. In this way, the projecting portion 26 can be miniaturized further in the axial direction, that is, the rotational speed detecting unit 2 can be miniaturized further in the axial direction.

(4) The degree of freedom with respect to design of the periphery of the wheel is increased by miniaturizing the rotational speed detecting unit 2 in the axial direction. In particular, a cutoff provided in the knuckle 29 to avoid the interference with the protruding portion 26 can be reduced to a cutout amount C' which is smaller than the conventional cutout amount A' and further the cutout amount B' realized in the first embodiment, thereby making it possible to suppress the reduction in strength of the knuckle 29.

In addition, this embodiment may be modified in a way that will be described below.

- In the second embodiment, while the two reinforcement members 40 are embedded in the protruding portion 26, the invention is not limited to this form. The purpose of providing the reinforcement members is to increase the bending strength of the protruding portion 26, and therefore, as long as the bending strength can be increased, the number of reinforcement members 40 may be changed. In addition, there is imposed no limitation on the shape of the reinforcement member 40, and hence, a configuration in which plate-like reinforcement members are embedded or a configuration in which fiber-like reinforcement members are dispersed in the resin member as the reinforcement members may be adopted.

- In addition, there is no specific limitation on the material which makes up the reinforcement member. Any material can be used as long as the material has appropriate bending strength and elastic force or elasticity and is suitable for embedment in a resin material.

### (Third Embodiment)

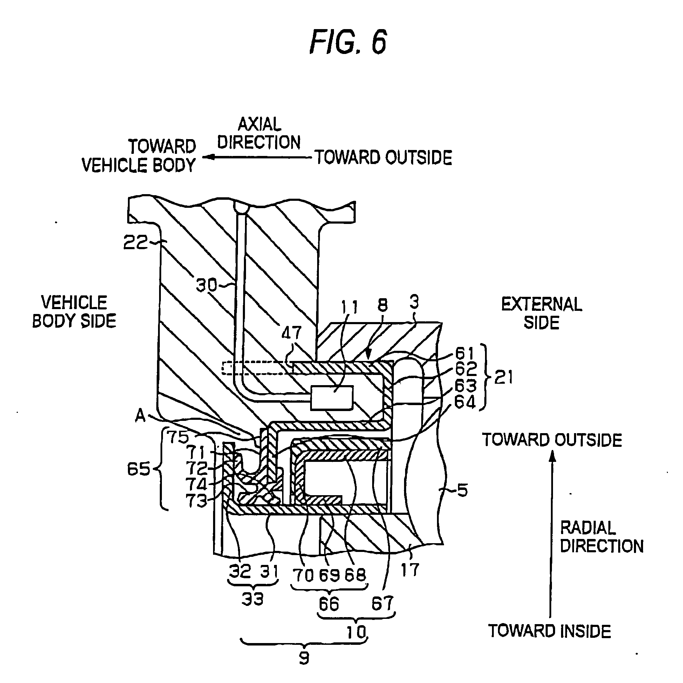

Hereinafter, a third embodiment will be described by the use of Fig. 6 in which a rotational speed detecting unit according to the invention is integrated with a seal unit for application to a rolling bearing unit. Fig. 6 is a partially enlarged view of a rolling bearing unit according to the third embodiment. Like reference numerals will be given to like portions to those of the first embodiment shown in Figs. 1 to 4, and in the following description, Figs. 1 to 4 will also be referred to.

According to the third embodiment, an elastic seal member 65 is bonded to an end portion of a flange portion 64, and the elastic seal member 65 (a first seal member) which is fixed to the flange portion 64 which is oriented toward an axis of the bearing unit is brought into sliding contact with a circumferentially outwardly oriented flange portion 32 and a cylindrical portion 31.

The elastic seal member 65 has a U-shaped bonded portion 71 which is bonded to the end portion of the inwardly oriented flange portion 64, an axial lip 72 which extends from a vehicle body side surface of the bonded portion 71 toward a vehicle body in an axial direction so as to be brought into sliding contact with the flange portion 32 of a rotatable side seal member 9, a first radial lip 73 which extends from a bottom surface of the bonded portion toward the vehicle body in the axial direction and radially inwards so as to be brought into sliding contact with an outer circumferential surface of the cylindrical portion 31 of the rotatable side seal member 9, and a second radial lip 74 which extends axially outwards and radially inwards from the bottom surface of the bonded portion 71 so as to be brought into sliding contact with the cylindrical portion 31 of the rotatable side seal member 9. Further, the vehicle body side of the U-shaped bonded portion 71 extends radially outwards, and a distal end portion thereof constitutes a clearance seal 75, that is, a second seal member described in Claim 5. The clearance seal 75 is held between a resin member 22 and the inwardly oriented flange portion 64 of a metal core 21.

A support member 66 of a pulser comprises a large diameter cylindrical portion 68, a small diameter cylindrical portion 69 and a connecting portion 70, and the small diameter cylindrical portion 69 is press fitted on an outside diameter portion of an axially outwardly oriented portion of the cylindrical portion 31 of the rotatable side seal member 9. A magnetized element 67 is bonded to an outer circumferential cylindrical portion of the large diameter cylindrical portion 68. A bent portion is provided individually at a vehicle body side end portion of the magnetized element 67 in such a manner as to be bonded to a vehicle body side surface of the connecting portion 70. A clearance between the magnetized element 67 and a water intrusion preventing cylindrical portion 63 is made to be as small a value as possible within in a range where both the members are not brought into contact with each other.

A sensor 11 is disposed in the resin member 22 which is filled between a fitting cylindrical portion 61 which constitutes the large diameter cylindrical portion and the water intrusion preventing cylindrical portion 63 which constitutes the small diameter cylindrical portion. A wiring passage cutout portion 47 through which lead wires 30 connecting the sensor 11 with a signal processing device are passed is provided in an axial vehicle body side end portion of the fitting cylindrical portion 61 of the metal core 21 of a stationary side seal member 8.

In the rotational speed detecting unit configured as described above, intrusion of water that has intruded from a position shown by a reference character A to the pulser 10 side is prevented by the elastic seal member 65. In addition, since the clearance seal 75 is held between the inwardly oriented flange portion 64 of the metal core 21 and the resin member 22, there occurs no such situation that water intrudes from the clearance between the inwardly oriented flange portion 64 of the metal core 21 or the water intrusion preventing cylindrical portion 63 and the resin member 22. In addition, the elastic seal member 65 employs a hydrogenated nitrile rubber (HNBR) as its main component.

According to the rolling bearing unit which employs the rotational speed detecting unit of this embodiment, the following advantages can be obtained.

(1) In the embodiment, the second seal member or the clearance seal 75 for filling the clearance produced between the metal core 21 and the resin member 22 is held therebetween in the way described above. Consequently, intrusion of water such as aqueous calcium chloride between the metal core 21 and the resin member 22 can be prevented, whereby corrosion of the resin member 22 is suppressed.
As a result, speed detection by the sensor can be ensured.

(2) In the embodiment, the clearance seal 75, which constitutes the second seal member, is molded integrally with the elastic seal member 65, which constitutes the first seal member. Consequently, intrusion of aqueous calcium chloride between the metal core and the resin member can be prevented by the inexpensive and simple configuration.

The second seal member employs the nitrile rubber (NBR) which is a material having resistance characteristics against calcium chloride as its main component. Consequently, intrusion of aqueous calcium chloride between the metal core and the resin member can be prevented by the member which is inexpensive and which has general-purpose properties. Therefore, there is no such situation that the clearance seal 75 which is the second seal member is corroded by calcium chloride and hence the clearance seal 75 can continue to fill the clearance produced between the metal core 21 and the resin member 22 over a long period of time. Consequently, intrusion of aqueous calcium chloride between the metal core 21 and the resin member 22 can be prevented over the long period of time, and the corrosion of the resin member 22 is suppressed. As a result, speed detection by the sensor can be ensured.

In addition, the embodiment may be modified in a way that will be described below.

- In the embodiment, while the clearance seal 75 is formed of the material which employs hydrogenated nitrile rubber (HNBR) as its main component, the clearance seal 75 may be formed of a material which employs nitrile rubber (NBR) as its main component. By forming the clearance seal 75 of the material which employs nitrile rubber (NBR) as its main component, although the chemical resistance is reduced, the low-temperature resistance of the clearance seal 75 can be increased, and the clearance seal 75 can be manufactured more inexpensively.

- In the embodiment, while the clearance seal 75 is molded integrally with the elastic seal member 65, the clearance seal 75 and the elastic seal member 65 may be molded separately. According to this configuration, the clearance seal 75 can be configured of a different material from that of the elastic seal member 65, a material optimal for the clearance seal 75 can be used without being restricted by qualities required for the elastic seal.

In the embodiment, while the magnetized element 67 is installed in the radial direction, the invention may be applied to a rolling bearing unit which employs a rotational speed detecting unit in which the magnetized element is installed in the axial direction. In short, the rotational speed detecting unit only has to have the construction which can prevent the intrusion of water between the resin member and the metal core by causing the clearance seal to be held between the resin member and the metal core.

## Claims

1. A rotational speed detecting unit comprising:
a metal core including a cylindrical portion which is fitted and fixed to a stationary member; and
a resin member in which a sensor for detecting a rotational speed of a rotary member and lead wires connected to the sensor are embedded, and a sensor side end portion of the resin member being fixed to the metal core, a portion of the resin member where the lead wires are embedded extending in a radial direction of the cylindrical portion,
wherein the portion of the resin member where the lead wires are embedded has a shape in which at least one projecting portions are provided in an axial direction of the cylindrical portion in a section taken along a plane which is substantially parallel to an outer circumferential surface of the cylindrical portion.

2. The rotational speed detecting unit according to claim 1,
wherein the sectional shape has a shape which is made up of at least one shape selected from a group of shapes including a substantially convex shape, a substantially U-like shape, and a substantially W-like shape.

3. The rotational speed detecting unit according to claim 1 or 2,
wherein a reinforcement member is embedded in the periphery of the portion of the resin member where the lead wires are embedded.

4. A rolling bearing unit comprising the rotational speed detecting unit according to any of claims 1 to 3.

5. A rotational speed detecting unit comprising:
a stationary side metal core which is fixed to a stationary member and which includes a recess;
a rotatable side metal core which is fixed to a rotary member;
a first seal member which is fixed to one of the stationary side metal core and the rotatable side metal core and is brought into sliding contact with the other;
a resin member in which a sensor for detecting a rotational speed of the rotary member is embedded and of which a portion where the sensor is embedded is inserted into and fixed to the recess of the stationary side metal core; and
a second seal member which fills a clearance that is produced between the stationary side metal core and the resin member.

6. The rotational speed detecting unit according to claim 5,
wherein the second seal member is made of a material having resistance characteristics against calcium chloride as a main component thereof.

7. The rotational speed detecting unit according to claim 6,
wherein the main component of the second seal member is a nitrile rubber or hydrogenated nitrile rubber.

8. The rotational speed detecting unit according to any of claims 5 to 7, wherein the second seal member is molded integrally with the first seal member.

9. A rolling bearing unit comprising the rotational speed detecting unit according to any of claims 5 to 8.
